(19) Europäisches Patentamt European Patent Office Office européen des brevets

(11) **EP 4 542 462 A1**

(12) **EUROPEAN PATENT APPLICATION**

(43) Date of publication:
23.04.2025 Bulletin 2025/17

(21) Application number: 23204205.1

(22) Date of filing: 17.10.2023

(51) International Patent Classification (IPC):
*G06N 10/80* (2022.01)

(52) Cooperative Patent Classification (CPC):
**G06N 10/80;** G06N 10/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Mastercard International Incorporated Purchase NY 10577 (US)**

(72) Inventor: **MALEKI, Mehrdad Kildare (IE)**

(74) Representative: **Murgitroyd & Company 165-169 Scotland Street Glasgow G5 8PL (GB)**

(54) **SIMULATING QUANTUM CIRCUITS**

(57) A computer-implemented method for simulating a quantum circuit. The method comprises: importing a quantum simulation package comprising a set of quantum functions; receiving instructions for simulating a quantum circuit having one or more qubits, the instructions comprising one or more of the quantum functions; and executing a simulation of the quantum circuit based on the instructions; wherein the one or more quantum functions comprises a conversion function configured to map classical data to a quantum state.

100

Figure 1

**Description**

**FIELD OF THE INVENTION**

The present disclosure relates to quantum circuits, and more particularly to simulating quantum circuits suitable for quantum machine learning.

**BACKGROUND TO THE INVENTION**

Quantum computing has emerged as a rapidly growing field in the past few decades, with numerous applications in various fields such as cryptography, finance, and material science. Quantum computers exploit the quantum superposition characteristics of particles to determine the optimal solution to complex non-linear problems. Unlike classical computers where a classical memory bit will take either a value of "1" or a value of "0"; in a quantum computer, a quantum bit or "qubit" may take a value of "1", "0" or a superposition of "1" and "0".

Essential components of the quantum circuit model of quantum computation include quantum gates, which perform mathematical operations on qubits, enabling the encoding of quantum information and quantum algorithms. In particular, quantum gates are responsible for transforming qubits' quantum states. Various quantum gates such as the Hadamard gate, Pauli gates, and CNOT gate are used in quantum computing.

Quantum circuits are currently difficult and/or expensive to build, and often suffer from issues such as quantum de-coherence. Accordingly, there is a need to simulate the behaviour of quantum circuits and quantum gates on classical computers. These quantum simulations may allow researchers to test and validate quantum algorithms, optimise quantum circuits, and explore quantum circuits without using expensive real quantum computers. Moreover, quantum simulations may provide a platform for education, allowing developers to learn about quantum computing and develop their algorithms.

A widely used tool for simulating quantum circuits is Qiskit (developed by IBM Research), an open-source software development kit for creating and manipulating quantum circuit programs and running them on IBM quantum devices or simulators. The primary version of Qiskit uses the Python programming language.

Several problems exist with quantum simulators such as Qiskit. In particular, Qiskit is a cloud-based quantum computing resource, and thus requires significant computational resources, at least due to the requirement of cloud-based resources. Qiskit also requires significant time to access quantum simulators through the cloud. Qiskit may be run on a local computing device by installing the package and associated dependencies, but this may require a significant amount of storage space for the large number of functions. Additionally, whilst Qiskit may be a powerful platform for simulating quantum circuits, it may be overwhelming for beginners or users with limited experience in programming or quantum mechanics.

The present disclosure has been devised to mitigate or overcome at least some of the above-mentioned problems.

**SUMMARY OF THE DISCLOSURE**

In accordance with a first aspect of the present disclosure, there is provided a computer-implemented method for simulating a quantum circuit, the method comprising: importing a quantum simulation package comprising a set of quantum functions; receiving instructions for simulating a quantum circuit having one or more qubits, the instructions comprising one or more of the quantum functions; and executing a simulation of the quantum circuit based on the instructions; wherein the one or more quantum functions comprises a conversion function configured to map classical data to a quantum state.

The present disclosure may provide a means for quantum gate simulation from scratch. The disclosure may provide a tool for researchers to simulate quantum gates and circuits, allowing them to test and validate their algorithms before implementing them on actual quantum computers. Advantageously, both computational time and computational resources may be saved, as testing on actual quantum computers can be time-consuming and expensive.

The present disclosure may also provide an improved means for facilitating quantum machine learning. In particular, the conversion function may provide a means for easily converting classical data, such as one or more classical points of a 2D dataset, to a quantum state.

The present disclosure may provide significant technical advantages over existing quantum simulators that may enable the development of more efficient and effective quantum algorithms. In particular, the present disclosure may provide a means for developing quantum algorithms without requiring security and privacy clearance from third parties associated with other quantum simulation packages, such as Qiskit. The quantum simulator of the present disclosure may be quickly imported to an appropriate library and used.

The present quantum simulator may advantageously provide a means for simulating quantum circuits requiring reduced computational resources and reduced computation time. In particular, the present quantum simulator may provide a means for simulating quantum circuits on a local computing device without requiring cloud access, thus requiring reduced computational resources and time.

Additionally, the present quantum simulator may advantageously provide a means for simulating quantum circuits that is more appropriate as a tool for education and learning. The present quantum simulator may serve as a more accessible and intuitive tool for learning about quantum gates and circuits. In particular, the present quantum simulator may be user-friendly with respect to quantum machine learning applications, wherein the conversion function provides an easy way to convert features maps to quantum state equivalents.

Furthermore, the present quantum simulator may provide a user with complete control over a quantum simulation, thus allowing for improved flexibility and customisability. In particular, a user may modify and optimise simulation code to suit their specific needs, thereby enabling the user to test and validate their algorithms more effectively

The present quantum simulator may also serve as a valuable complement to existing quantum simulation packages, such as Qiskit. In particular, results from both the present quantum simulator and an alternative quantum simulator may be compared to gain a more comprehensive understanding of both quantum simulators.

Preferably, the conversion function comprises: receiving classical data; generating a complex number based on the classical data; generating a conformal mapping of the complex number; extracting real and imaginary portions from the conformal mapping; mapping the real and imaginary portions to a unit sphere; and generating the quantum state based on the mapping. Thus, the conversion function may provide a means for converting classical data to a quantum state that scales well with an increasing number of features. Converting classical data to a quantum state in this manner may advantageously require fewer computational resources as the number of features increases.

In some embodiments, the set of quantum functions comprises an initialization function configured to: initialize the quantum circuit according to an initialization user input, wherein the initialization user input is used to define the number of qubits of the quantum circuit; and initialize the qubits in a '0' quantum state.

In some embodiments, the set of quantum functions comprises a quantum X gate function configured to apply a Pauli-x operator to a single qubit according to an X gate user input.

In some embodiments, the set of quantum functions comprises a quantum measurement function configured to measure the qubits of the quantum circuit.

In some embodiments, the set of quantum functions comprises a quantum Hadamard function configured to apply a Hadamard operator to a single qubit according to a Hadamard gate user input.

In some embodiments, the set of quantum functions comprises a CNOT function configured to apply a CNOT operator to two qubits according to a CNOT gate user input.

In some embodiments, the set of quantum functions comprises an x-rotation function configured to apply an x-rotation operator to a single qubit according to an x-rotation user input.

In some embodiments, the set of quantum functions comprises a y-rotation function configured to apply a y-rotation operator to a single qubit according to a y-rotation user input.

In some embodiments, the set of quantum functions comprises a z-rotation function configured to apply a z-rotation operator to a single qubit according to a z-rotation user input.

In some embodiments, the quantum simulation package comprises a Python Numpy package.

In some embodiments, the quantum simulation package comprises a Python Random module.

In some embodiments, the quantum simulation package comprises a Python Pyplot package.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

## BRIEF DESCRIPTION OF THE DRAWINGS

One or more embodiments of the disclosure will now be described, by way of example only, with reference to the accompanying drawings, in which:

Figure 1 illustrates a flow diagram of a method for simulating a quantum circuit in accordance with a first aspect

Figure 2 illustrates a first example Python code;

Figure 3 illustrates a second example Python code;

Figure 4 illustrates a third example Python code;

Figure 5 illustrates a fourth example Python code;

Figure 6 illustrates a conversion method using a conversion function;

Figure 7A illustrates a graph of randomly generated classical data;

Figure 7B illustrates a unit sphere comprising mapped portions;

Figure 7C shows a representation of a quantum state on a Block sphere; and

Figure 7D shows a measurement of the quantum state of Figure 7C.

Note that the drawings are schematic and accompany the description, illustrating preferred and exemplary embodiments and not necessarily being drawn to scale.

## DETAILED DESCRIPTION

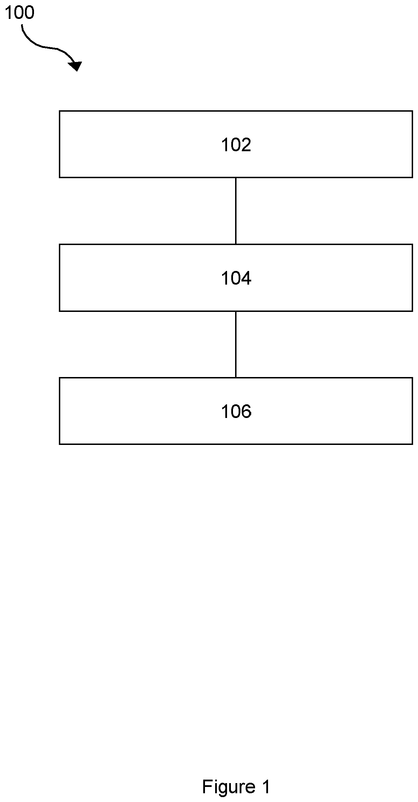

Figure 1 shows an example method 100 according to a first aspect of the present invention for simulating a quantum circuit.

The method 100 comprises importing 102 a quantum simulation package comprising a set of quantum functions.

The method 100 comprises receiving 104 instructions for simulating a quantum circuit having one or more qubits, the instructions comprising one or more of the quantum functions.

The method 100 comprises executing 106 a simulation of the quantum circuit based on the instructions.

The set of quantum functions comprises an initialization function configured to: initialize the quantum circuit according to an initialization user input, wherein the user input is used to define the number of qubits of the quantum circuit; and initialize the qubits in a '0' quantum state.

The initialization function is:

```
def __init__(self, num_qubits):
        self.num_qubits = num_qubits
        self.qubits = np.zeros(shape=(2 ** num_qubits, 1), dtype=np.complex64)
        self.qubits[0][0] = 1
```

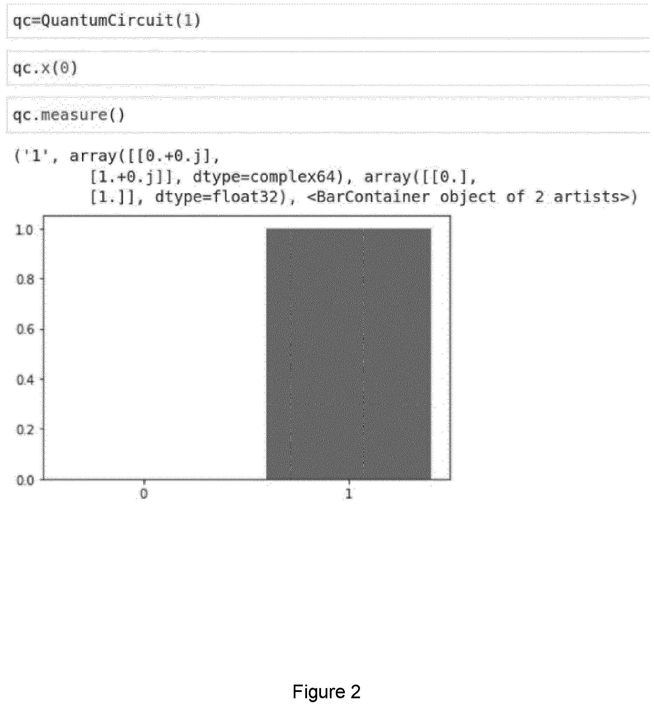

Accordingly, as shown in Figure 2, a user inputs the command "qc=QuantumCircuit(1)", and the processor initializes a quantum circuit having a single qubit initialized in the '0' quantum state.

The set of quantum functions further comprises a quantum X gate function configured to apply a Pauli-x operator to a single qubit according to an X gate user input.

The quantum X gate function is:

```
def x(self, qubit):
        x_gate = np.array([[0, 1], [1, 0]], dtype=np.complex64)
        qubit_ops = [np.eye(2)] * self.num_qubits
        qubit_ops[qubit] = x_gate
        full_op = qubit_ops[0]
        for qubit_op in qubit_ops[1:]:
                full_op = np.kron(full_op, qubit_op)
        self.qubits = np.dot(full_op, self.qubits)
```

Accordingly, as shown in Figure 2, a user inputs the command "qc.x(0)", and the processor applies the Pauli-x operator to the 0th qubit. In the example of Figure 1, since the quantum circuit had been initialized to have a single qubit, the Pauli-x operator is applied to the only qubit of the quantum circuit.

The set of quantum functions further comprises a quantum measurement function configured to measure the qubits of the quantum circuit.

The quantum measurement function is:

```
def measure(self):
        probabilities = np.abs(self.qubits) ** 2
        nqb=int(np.log(len(self.qubits))/np.log(2))
        binary_out=[format(i,f'0{nqb}b') for i in range(len(self.qubits))]
        prob_list=[probabilities[i][0] for i in range(len(self.qubits))]
        measured_state =
random.choices(range(len(self.qubits)),weights=probabilities)[0]
        updated_state_vector = np.zeros_like(self.qubits)
        updated_state_vector[measured_state] = 1.0
        return format(measured_state,f'0{nqb}b'), updated_state_vector, probabilities,
    plt.bar(binary_out, prob_list)
```

Accordingly, as shown in Figure 2, a user inputs the command "qc.measure()", and the processor performs a measurement and displays a probability distribution of the quantum state as a bar plot.

The set of quantum functions further comprises a quantum Hadamard function configured to apply a Hadamard operator to a single qubit according to a Hadamard gate user input.

The quantum Hadamard function is:

```
def h(self, qubit):
        h_gate = np.array([[1, 1], [1, -1]], dtype=np.complex64)/np.sqrt(2)
        qubit_ops = [np.eye(2)] * self.num_qubits
        qubit_ops[qubit] = h_gate
        full_op = qubit_ops[0]
        for qubit_op in qubit_ops[1:]:
        full_op = np.kron(full_op, qubit_op)
        self.qubits = np.dot(full_op, self.qubits)
```

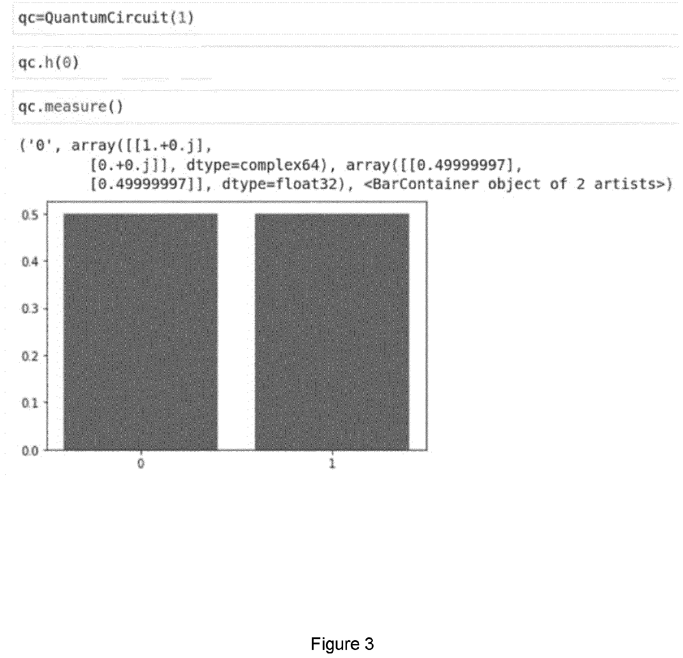

Accordingly, as shown in Figure 3, a user inputs the command "qc.h(0)", and the processor applies the Hadamard operator to the 0th qubit. In the example of Figure 1, since the quantum circuit had been initialized to have a single qubit, the Hadamard operator is applied to the only qubit of the quantum circuit.

As is also shown in Figure 3, a user input command "qc.measure()" causes the processor to perform a measurement and display a probability distribution of the quantum state as a bar plot. The probability distribution following the Hadamard operator being applied to the 0th qubit results in a superposition state.

The set of quantum functions further comprises a CNOT function configured to apply a CNOT operator to two qubits according to a CNOT gate user input.

The CNOT function is:

```
def cx(self,control_qubit, target_qubit):
    cx_gate = np.array([[1, 0, 0, 0], [0, 1, 0, 0], [0, 0, 0, 1], [0, 0, 1, 0]])
    if control_qubit < target_qubit:
        unitary = np.kron(np.eye(2 ** control_qubit), np.kron(cx_gate, np.eye(2 **
(target_qubit - control_qubit - 1))))
    else:
        unitary = np.kron(np.eye(2 ** target_qubit), np.kron(cx_gate, np.eye(2 **
(control_qubit - target_qubit - 1))))
    np.dot(unitary, self.qubits)
```

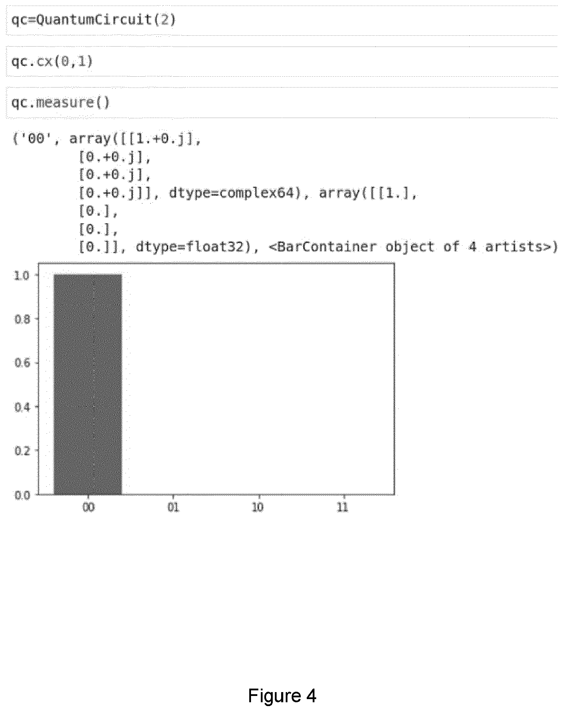

As shown in Figure 4, a user inputs the command "qc=QuantumCircuit(2)", and the processor initializes a quantum circuit having two qubits, both initialized in the '0' quantum state. The user also inputs the command "qc.cx(0,1)", and the processor applies the CNOT operator to the 0th and 1st qubits, with the 0th qubit being the control qubit, and the 1st qubit being the target qubit.

As is also shown in Figure 4, a user input command "qc.measure()" causes the processor to perform a measurement and display a probability distribution of the quantum state as a bar plot. The probability distribution following the Hadamard operator being applied to the 0th qubit results in '00' state due to the control qubit (i.e., the 0th qubit) being in the '0' state.

The set of quantum functions further comprises an x-rotation function configured to apply an x-rotation operator to a single qubit according to an x-rotation user input.

The x-rotation function is:

```
def rx(self, qubit,theta):
    x_gate = np.array([[np.cos(theta/2), -1j*np.sin(theta/2)],
    [-1j*np.sin(theta/2), np.cos(theta/2)]], dtype=np.complex64)
    qubit_ops = [np.eye(2)] * self.num_qubits
    qubit_ops[qubit] = x_gate
    full_op = qubit_ops[0]
    for qubit_op in qubit_ops[1:]:
    full_op = np.kron(full_op, qubit_op)
    self.qubits = np.dot(full_op, self.qubits)
```

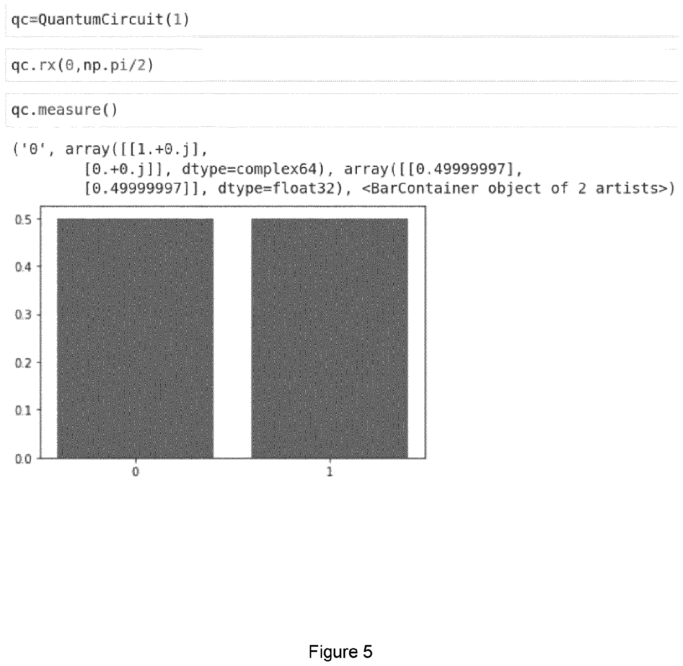

As shown in Figure 5, a user inputs the command "qc=QuantumCircuit(1)", and the processor initializes a quantum circuit having a single qubits initialized in the '0' quantum state. The user also inputs the command "qc.rx(0,np.pi/4)", and the processor applies the x-rotation operator to the 0th qubit, whereby the 0th qubit is rotated by pi/4 radians. As is also shown in Figure 5, a user input command "qc.measure()" causes the processor to perform a measurement and display a probability distribution of the quantum state as a bar plot.

The set of quantum functions further comprises a y-rotation function configured to apply an y-rotation operator to a single qubit according to a y-rotation user input.

The y-rotation function is:

```
def ry(self, qubit,theta):
    x_gate = np.array([[np.cos(theta/2), -np.sin(theta/2)],
    [np.sin(theta/2), np.cos(theta/2)]], dtype=np.complex64)
    qubit_ops = [np.eye(2)] * self.num_qubits
    qubit_ops[qubit] = x_gate
    full_op = qubit_ops[0]
    for qubit_op in qubit_ops[1:]:
    full_op = np.kron(full_op, qubit_op)
    self.qubits = np.dot(full_op, self.qubits)
```

The set of quantum functions further comprises a z-rotation function configured to apply a z-rotation operator to a single qubit according to a z-rotation user input.

The z-rotation function is:

```
def rz(self, qubit,theta):
    x_gate = np.array([[np.exp(-1j*theta/2), 0],
    [0, np.exp(1j*theta/2)]], dtype=np.complex64)
    qubit_ops = [np.eye(2)] * self.num_qubits
    qubit_ops[qubit] = x_gate
    full_op = qubit_ops[0]
    for qubit_op in qubit_ops[1:]:
    full_op = np.kron(full_op, qubit_op)
    self.qubits = np.dot(full_op, self.qubits)
```

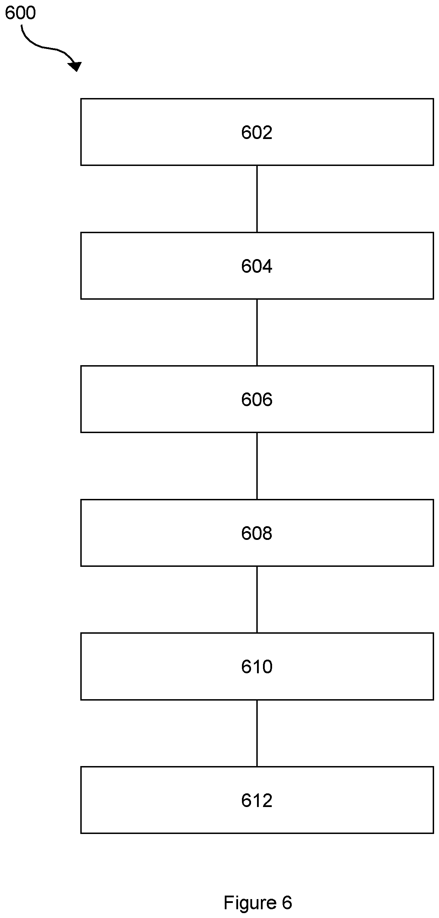

The one or more quantum functions comprises a conversion function configured to map classical data to a quantum state. Figure 6 shows a conversion method 600 using the conversion function. In the following example, the conversion function provides a process of converting, for example, a classical point (x,y) of a 2D dataset to a quantum state q.

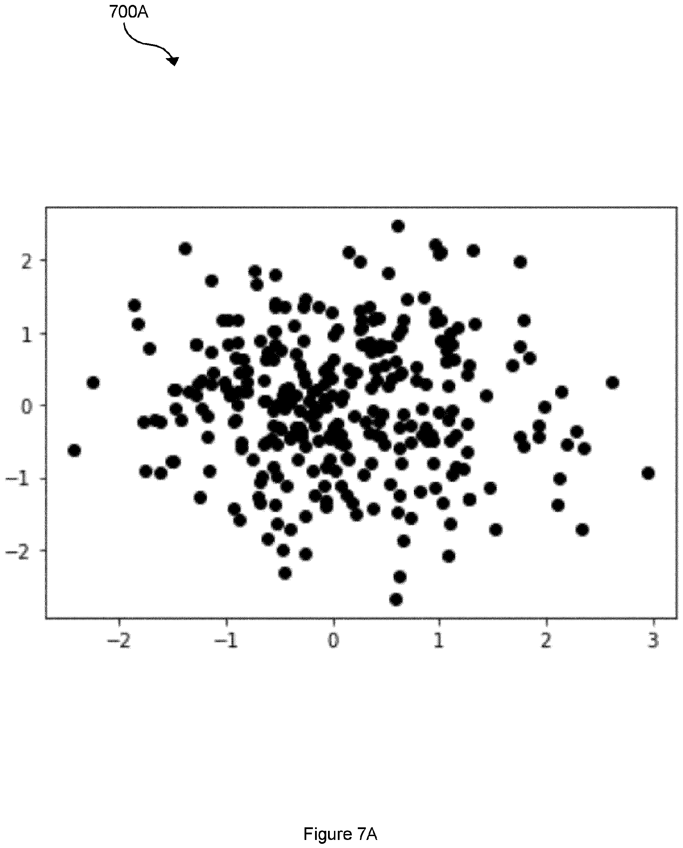

In a first step 602 of the method 600, classical data is received. For example, classical data, such as a coordinate, is input via a user input. In the present example, the classical data comprises one or more classical points of a 2D dataset. Figure 7A shows a graph 600A of randomly generated classical data for the purposes of illustration.

In step 604, a complex number is generated based on the classical data. For example, a complex number generated based on a classical point (x,y) of a 2D data set is z = x + iy.

In step 606, a conformal mapping of the complex number is generated based on the complex number. For example, for the complex number z = x + iy, a conformal mapping of w = 1/z is generated.

In step 608, real and imaginary portions are extracted from the conformal mapping. For example, for the conformal mapping w = 1/z, real portion u = Re(w) and imaginary portion v = Im(w) are are extracted from the conformal mapping w.

In step 610, the real and imaginary portions are mapped to a unit sphere. For example, the real and imaginary portions are mapped to the unit sphere by stereographic projection. Continuing with the present example, a stereographic mapping of the real and imaginary portions may be:

$$X = \frac{2u}{(1 + u^2 + v^2)}$$

$$Y = \frac{2v}{(1 + u^2 + v^2)}$$

$$Z = \frac{(u^2 + v^2 - 1)}{(1 + u^2 + v^2)}$$

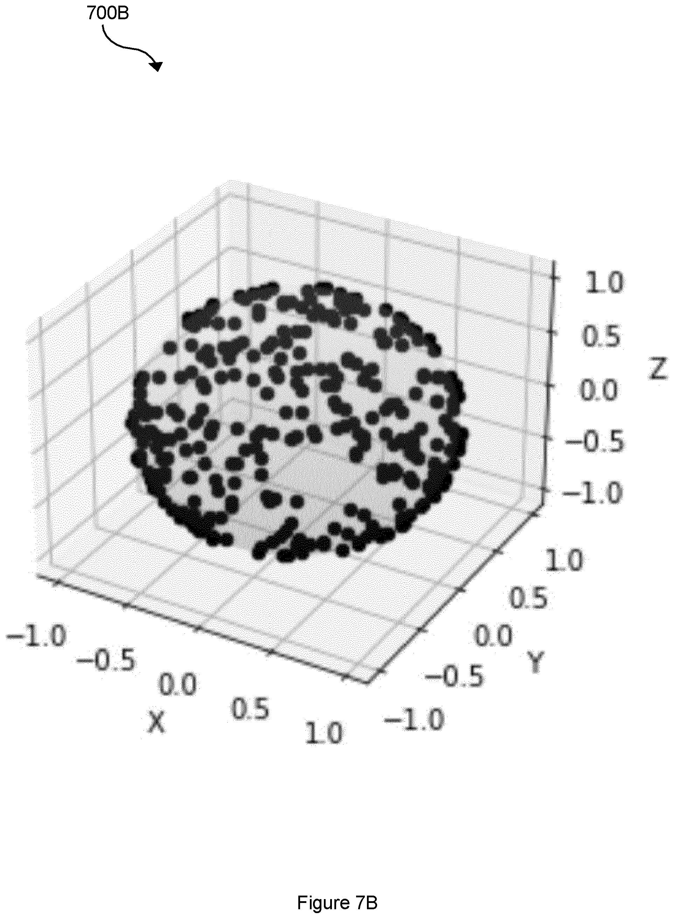

Figure 7B shows a unit sphere 700B comprising the mapped portions.

In step 612, the quantum state is generated based on the mapping. The quantum state can be determined by using a first and second coefficient argument, each based on the mapping. In particular, a first coefficient arguments and a second coefficient argument are generated. The first coefficient argument is:

$$\varphi = \arccos(X)$$

The second coefficient arguments is:

$$\theta = \arccos(Z)$$

The quantum state q is determined by:

$$q = \cos\left(\frac{\theta}{2}\right)|0\rangle + \sin\left(\frac{\theta}{2}\right)e^{(\varphi i)}|1\rangle$$

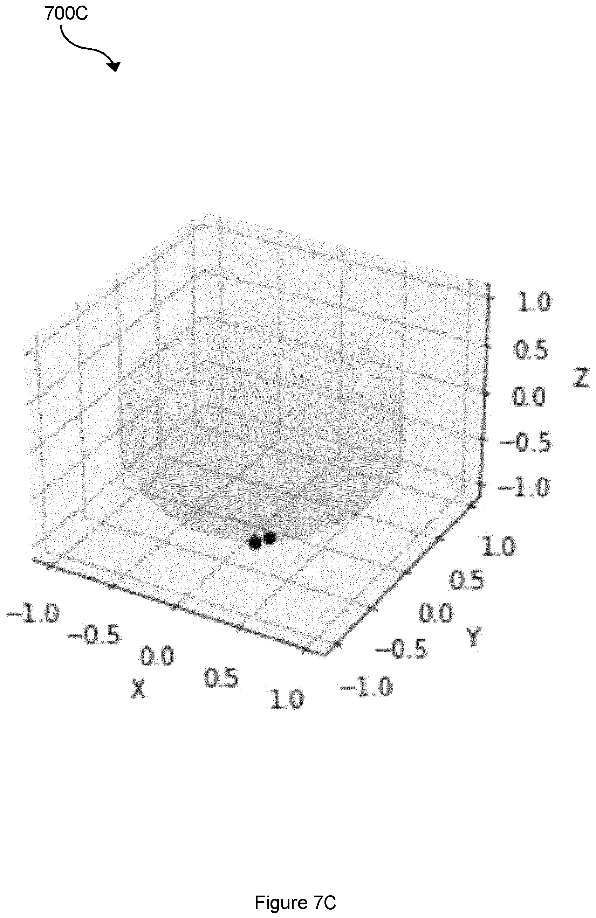

Figure 7C shows a representation 700C of the quantum state q on a Bloch sphere.

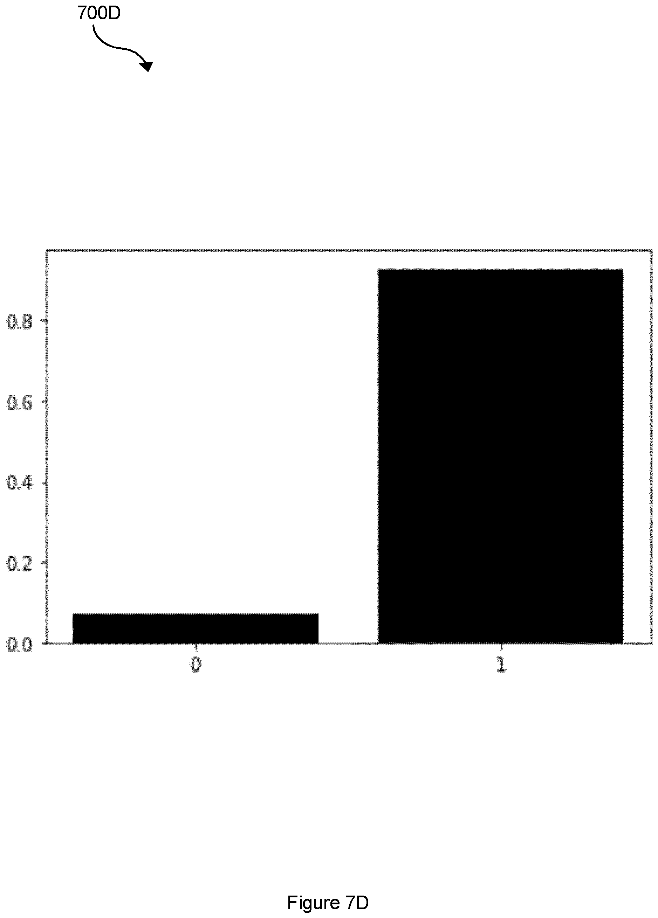

The quantum state q may subsequently be measured. Figure 7D shows a measurement 700D of the quantum state q of Figure 7C.

Some embodiments may assign computer processing tasks to recipient processors, for example, but not limited to CPUs, GPUs, DSPs, GP-GPUs, quantum processor and/or processors optimised for artificial intelligence tasks. In such embodiments, the processors are the recipients and the processing tasks are the opportunities. In such embodiments, in for example, a complex cloud computing infrastructure, a large number of tasks, of differing types, requiring execution may be received and a large number of processors may be housed within the cloud computing infrastructure.

The description provided herein may be directed to specific implementations. It should be understood that the discussion provided herein is provided for the purpose of enabling a person with ordinary skill in the art to make and use any subject matter defined herein by the subject matter of the claims.

It should be intended that the subject matter of the claims not be limited to the implementations and illustrations provided herein, but include modified forms of those implementations including portions of implementations and combinations of elements of different implementations in accordance with the claims. It should be appreciated that in the development of any such implementation, as in any engineering or design project, numerous implementation-specific decisions should be made to achieve a developers' specific goals, such as compliance with system-related and business related constraints, which may vary from one implementation to another. Moreover, it should be appreciated that such a development effort may be complex and time consuming, but would nevertheless be a routine undertaking of design, fabrication, and manufacture for those of ordinary skill having benefit of this disclosure.

Reference has been made in detail to various implementations, examples of which are illustrated in the accompanying drawings and figures. In the detailed description, numerous specific details are set forth to provide a thorough understanding of the disclosure provided herein. However, the disclosure provided herein may be practiced without these specific details. In some other instances, well-known methods, procedures, components, circuits, and networks have not been described in detail so as not to unnecessarily obscure details of the embodiments.

It should also be understood that, although the terms first, second, etc. may be used herein to describe various elements, these elements should not be limited by these terms. These terms are only used to distinguish one element from another. For example, a first element could be termed a second element, and, similarly, a second element could be termed a first element. The first element and the second element are both elements, respectively, but they are not to be considered the same element.

The terminology used in the description of the disclosure provided herein is for the purpose of describing particular implementations and is not intended to limit the disclosure provided herein. As used in the description of the disclosure provided herein and appended claims, the singular forms "a," "an," and "the" are intended to include the plural forms as well, unless the context clearly indicates otherwise. The term "and/or" as used herein refers to and encompasses any and all possible combinations of one or more of the associated listed items. The terms "includes," "including," "comprises," and/or "comprising," when used in this specification, specify a presence of stated features, integers, steps, operations, elements, and/or components, but do not preclude the presence or addition of one or more other features, integers, steps, operations, elements, components and/or groups thereof.

As used herein, the term "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context. The terms "up" and "down"; "upper" and "lower"; "upwardly" and "downwardly"; "below" and "above"; and other similar terms indicating relative positions above or below a given point or element may be used in connection with some implementations of various technologies described herein.

While the foregoing is directed to implementations of various techniques described herein, other and further implementations may be devised in accordance with the disclosure herein, which may be determined by the claims that follow. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computer-implemented method for simulating a quantum circuit, the method comprising:

   importing a quantum simulation package comprising a set of quantum functions;
   receiving instructions for simulating a quantum circuit having one or more qubits, the instructions comprising one or more of the quantum functions; and
   executing a simulation of the quantum circuit based on the instructions;
   wherein the one or more quantum functions comprises a conversion function configured to map classical data to a quantum state.

2. The computer-implemented method of claim 1, wherein the conversion function comprises:

   receiving classical data;
   generating a complex number based on the classical data;
   generating a conformal mapping of the complex number;
   extracting real and imaginary portions from the conformal mapping;
   mapping the real and imaginary portions to a unit sphere; and
   generating the quantum state based on the mapping.

3. The computer-implemented method of any preceding claim, wherein the set of quantum functions comprises an initialization function configured to:

   initialize the quantum circuit according to an initialization user input, wherein the initialization user input is used to define the number of qubits of the quantum circuit; and
   initialize the qubits in a '0' quantum state.

4. The computer-implemented method of any preceding claim, wherein the set of quantum functions comprises a quantum X gate function configured to apply a Pauli-x operator to a single qubit according to an X gate user input.

5. The computer-implemented method of any preceding claim, wherein the set of quantum functions comprises a quantum measurement function configured to measure the qubits of the quantum circuit.

6. The computer-implemented method of any preceding claim, wherein the set of quantum functions comprises a quantum Hadamard function configured to apply a Hadamard operator to a single qubit according to a Hadamard gate user input.

7. The computer-implemented method of any preceding claim, wherein the set of quantum functions comprises a CNOT function configured to apply a CNOT operator to two qubits according to a CNOT gate user input.

8. The computer-implemented method of any preceding claim, wherein the set of quantum functions comprises an x-rotation function configured to apply an x-rotation operator to a single qubit according to an x-rotation user input.

9. The computer-implemented method of any preceding claim, wherein the set of quantum functions comprises a y-rotation function configured to apply a y-rotation operator to a single qubit according to a y-rotation user input.

10. The computer-implemented method of any preceding claim, wherein the set of quantum functions comprises a z-rotation function configured to apply a z-rotation operator to a single qubit according to a z-rotation user input.

11. The computer-implemented method of any preceding claim, wherein the quantum simulation package comprises a Python Numpy package.

12. The computer-implemented method of any preceding claim, wherein the quantum simulation package comprises a Python Random module.

13. The computer-implemented method of any preceding claim, wherein the quantum simulation package comprises a Python Pyplot package.

14. A data processing apparatus/device/system comprising means for carrying out the steps of the method of claim 1.

15. A computer program product comprising instructions which, when the program is executed by a computer, cause the computer to carry out the steps of the method of claim 1.

16. A computer-readable storage medium comprising instructions which, when executed by a computer, cause the computer to carry out the steps of the method of claim 1.

100

Figure 1

```
qc=QuantumCircuit(1)
```

```
qc.x(0)
```

```
qc.measure()
```

```
('1', array([[0.+0.j],
        [1.+0.j]], dtype=complex64), array([[0.],
        [1.]], dtype=float32), <BarContainer object of 2 artists>)
```

Figure 2

```
qc=QuantumCircuit(1)

qc.h(0)

qc.measure()

('0', array([[1.+0.j],
        [0.+0.j]], dtype=complex64), array([[0.49999997],
        [0.49999997]], dtype=float32), <BarContainer object of 2 artists>)
```

Figure 3

```
qc=QuantumCircuit(2)

qc.cx(0,1)

qc.measure()

('00', array([[1.+0.j],
       [0.+0.j],
       [0.+0.j],
       [0.+0.j]], dtype=complex64), array([[1.],
       [0.],
       [0.],
       [0.]], dtype=float32), <BarContainer object of 4 artists>)
```

Figure 4

```
qc=QuantumCircuit(1)
```

```
qc.rx(0,np.pi/2)
```

```
qc.measure()
```

```
('0', array([[1.+0.j],
       [0.+0.j]], dtype=complex64), array([[0.49999997],
       [0.49999997]], dtype=float32), <BarContainer object of 2 artists>)
```

Figure 5

600

602

604

606

608

610

612

Figure 6

700A

Figure 7A

700B

Figure 7B

700C

Figure 7C

700D

Figure 7D

Europäisches
Patentamt

European
Patent Office

Office européen
des brevets

# EUROPEAN SEARCH REPORT

**Application Number**

EP 23 20 4205

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/309386 A1 (IBM [US]) 29 September 2022 (2022-09-29) * figures 1, 6 * * paragraphs [0052] - [0061] * * paragraphs [0075] - [0079] * * paragraphs [0028] - [0040] * ----- | 1-16 | INV. G06N10/80 |
| A | ALONSO VILADOMAT JASSO ET AL: "Quantum and Quantum-Inspired Stereographic K Nearest-Neighbour Clustering", ARXIV.ORG, CORNELL UNIVERSITY LIBRARY, 201 OLIN LIBRARY CORNELL UNIVERSITY ITHACA, NY 14853, 7 August 2023 (2023-08-07), XP091588970, * sections 2.2 and 3.1 * ----- | 2 | |
| A | HIMANSHU SAHU ET AL: "Quantum Computing Toolkit From Nuts and Bolts to Sack of Tools", ARXIV.ORG, CORNELL UNIVERSITY LIBRARY, 201 OLIN LIBRARY CORNELL UNIVERSITY ITHACA, NY 14853, 6 March 2023 (2023-03-06), XP091454078, * the whole document * ----- | 1-16 | **TECHNICAL FIELDS SEARCHED (IPC)** G06N |

The present search report has been drawn up for all claims

| Place of search | Date of completion of the search | Examiner |
|---|---|---|
| The Hague | 2 April 2024 | Millet, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 4205

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2024

| Patent document cited in search report | Publication date | Patent family member(s) | | Publication date |
|---|---|---|---|---|
| US 2022309386 A1 | 29-09-2022 | AU | 2022246038 A1 | 31-08-2023 |
| | | CN | 117099112 A | 21-11-2023 |
| | | EP | 4315185 A1 | 07-02-2024 |
| | | JP | 2024512443 A | 19-03-2024 |
| | | US | 2022309386 A1 | 29-09-2022 |
| | | WO | 2022200475 A1 | 29-09-2022 |

EPO FORM P0459

For more details about this annex : see Official Journal of the European Patent Office, No. 12/82